(19) **Europäisches Patentamt**
**European Patent Office**
**Office européen des brevets**

(11) **EP 2 483 087 B1**

(12) **FASCICULE DE BREVET EUROPEEN**

(45) Date de publication et mention
de la délivrance du brevet:
**18.12.2013 Bulletin 2013/51**

(21) Numéro de dépôt: **10757614.2**

(22) Date de dépôt: **28.09.2010**

(51) Int Cl.:
***B60C 11/12*** *(2006.01)* ***B60C 11/03*** *(2006.01)*

(86) Numéro de dépôt international:
**PCT/EP2010/064375**

(87) Numéro de publication internationale:
**WO 2011/039194 (07.04.2011 Gazette 2011/14)**

(54) **BANDE DE ROULEMENT POUR PNEU DE RIGIDITE AMELIOREE**

REIFENLAUFSTREIFEN MIT VERBESSERTER STEIFIGKEIT

TIRE TREAD HAVING IMPROVED RIGIDITY

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **29.09.2009 FR 0956752**

(43) Date de publication de la demande:
**08.08.2012 Bulletin 2012/32**

(73) Titulaires:
• **COMPAGNIE GENERALE DES
ETABLISSEMENTS MICHELIN
63000 Clermont-Ferrand (FR)**
• **MICHELIN Recherche et Technique S.A.
1763 Granges-Paccot (CH)**

(72) Inventeurs:
• **AUDIGIER, Richard
F-63350 St-Laure (FR)**

• **ORAISON, Stéphane
F-03200 Le Vernet (FR)**
• **VANDAELE, Matthieu
F-63410 Charbonnieres-les-Varennes (FR)**
• **DOUET, Gilles
F-63100 Clermont-Ferrand (FR)**

(74) Mandataire: **Diernaz, Christian
M. F. P. Michelin,
23, place des Carmes Dechaux,
SGD/LG/PI-F35-Ladoux
63040 Clermont-Ferrand Cedex 09 (FR)**

(56) Documents cités:
**EP-A2- 0 335 694       WO-A2-02/38399
FR-A1- 2 924 981       JP-A- 2 310 108**

**Description**

L'invention concerne les bandes de roulement pour pneus et plus particulièrement les dessins de sculpture de ces bandes ainsi que les pneus pourvus de telles bandes dont les performances en drainage de l'eau présente sur la chaussée par temps de pluie sont rendues plus pérennes, ces bandes de roulement n'étant pas pénalisées en vitesse d'usure.

De façon connue, l'utilisation de pneus dans des conditions de roulage par temps de pluie requiert une élimination la plus rapide possible de l'eau dans la région de contact du pneu avec la chaussée afin d'assurer un contact du matériau constituant la bande de roulement avec cette chaussée. L'eau qui n'est pas repoussée sur l'avant du pneu s'écoule ou est captée en partie dans les rainures et incisions formées dans la bande de roulement du pneu.

Définitions :

Par sculpture d'une bande de roulement, on entend ici la géométrie de la partie de la bande de roulement destinée à venir en contact avec une chaussée, cette sculpture étant formée par des éléments de reliefs délimités les uns des autres par des découpures (rainures, incisions, puits, cavités).

Par rainure, on entend ici un creux débouchant sur une surface de roulement venant en contact avec la chaussée, ce creux ayant une largeur moyenne appropriée pour que les parois de matière qui le délimitent ne soient jamais en contact l'une sur l'autre dans les conditions normales d'usage du pneu. Les rainures peuvent avoir toute forme vue en section transversale et en trace sur la surface de roulement et être orientées selon une direction quelconque. Par trace d'une rainure sur la surface de roulement, on entend ici la ligne moyenne géométrique suivie par les arêtes formées par ladite rainure sur ladite surface. Une rainure peut avoir des extrémités ouvertes vers l'extérieur de la bande ou encore être continue circonférentiellement.

Par incision, on entend ici une fente mince ayant une largeur moyenne faible et telle que, sous certaines conditions de sollicitation, les parois de matière la délimitant puissent venir, au moins partiellement, en contact l'une sur l'autre lors du passage dans la région de contact avec la route.

Dans la présente description, on utilise les termes « radial » ou « radialement » pour indiquer une direction qui, lorsqu'elle est prise sur le pneu, est une direction perpendiculaire à l'axe de rotation du pneu tandis que, lorsqu'elle est prise sur une bande de roulement seule, elle correspond à la direction de l'épaisseur de ladite bande. Par ailleurs on utilise le mot « circonférentiel » pour indiquer une direction qui, correspond à une direction tangente à un cercle centré sur l'axe de rotation du pneu. Cette même direction correspond à la direction longitudinale de la bande de roulement celle-ci étant formée à la manière d'une bande plane avant incorporation à un pneu.

Le volume total de creux (ou de cavité) d'une bande de roulement est égal à la somme de tous les volumes de creux s'ouvrant ou non sur la surface de roulement de la bande à l'état neuf. Certains de ces creux peuvent s'ouvrir dans le contact avec une chaussée après une usure partielle de la bande.

Le volume total d'une bande de roulement est égal à la somme du volume total de matière pouvant être usé en roulage avant de devoir retirer le pneu (soit pour renouveler sa bande de roulement par rechapage, soit pour le remplacer par un nouveau pneu) et du volume total de creux.

L'épaisseur totale E d'une bande de roulement correspond à l'épaisseur de matière destinée à être usée lors du roulage. Par convention, cette épaisseur totale E ne prend pas en compte l'épaisseur éventuellement prévue pour permettre un renouvellement partiel des rainures par une opération de recreusage. Cette épaisseur totale E est mesurée sur le pneu neuf entre la surface de roulement et la surface externe des indicateurs d'usure. Radialement entre l'armature de sommet du pneu et cette épaisseur totale E, on trouve généralement une épaisseur complémentaire E* de bande de roulement.

Pour les pneus destinés aux essieux directeur ou porteur d'un véhicule poids lourd, il est usuel de pourvoir la bande de roulement de ces pneus avec des rainures circonférentielles (ou encore longitudinales) dont la profondeur est égale à l'épaisseur totale de la bande de roulement (cette épaisseur totale ne prenant pas en compte compter l'épaisseur éventuellement prévue pour permettre un renouvellement partiel des rainures). Cette profondeur de rainure est en règle générale comprise entre 13 et 18 mm sur les pneus destinés auxdits essieux. Pour les pneus destinés aux essieux moteurs la profondeur des rainures peut toutefois aller jusqu'à 24 mm. Ainsi, il est possible d'obtenir une bande de roulement ayant une performance en drainage de l'eau présente sur la route qui est toujours au dessus d'une performance minimale dite performance de sécurité et cela quel que soit le niveau de l'usure de cette bande.

Pour les pneus de l'état de la technique, le volume total de creux est en règle générale compris entre 15 et 25% du volume total de la bande de roulement destiné à être usé au cours du roulage (le volume total correspondant au volume de matière auquel est ajouté ledit volume total de creux).

En outre, on constate que ces pneus ont un volume de creux efficace Ve dans la région de contact qui est relativement important à l'état neuf (efficace signifiant ici potentiellement susceptible d'être rempli par un liquide présent sur la chaussée). Ce volume de creux s'ouvrant sur la surface de roulement dans le contact est en moyenne de l'ordre de 100 cm$^3$ pour un pneu de dimension 315/70 R 22.5. Le volume de creux efficace Ve s'ouvrant sur la surface de roulement dans le contact est évalué lorsque le pneu est soumis à ses conditions nominales de gonflage et d'écrasement en statique telles que définies par le standard ETRTO.

Si des rainures ou plus généralement des cavités sont indispensables au drainage de l'eau dans le contact avec une chaussée, la diminution de matière qui en résulte sur la bande peut affecter sensiblement la performance en usure de cette bande et en conséquence réduire la durée d'utilisation du pneu résultant d'une augmentation de la vitesse d'usure. D'autres performances du pneu peuvent aussi être affectées et notamment les performances en comportement, en bruit en roulage, en résistance au roulement. Il est également observé que ces rainures formées pour avoir une profondeur utile égale à la hauteur de bande à user peuvent être la cause de problèmes d'endurance. Dans certaines conditions de roulage, des objets étrangers comme des cailloux peuvent être capturés dans ces rainures et venir agresser le fond de ces rainures et générer l'apparition de cassures dans le caoutchouc.

La réalisation d'une pluralité de rainures sur une bande de roulement a donc pour inconvénient de réduire la quantité de matière de bande pour une largeur donnée de bande et par voie de conséquence de réduire la durée d'utilisation du pneu à cause d'une augmentation de la vitesse d'usure.

Par ailleurs, les rainures génèrent un abaissement des rigidités de compression et de cisaillement puisque ces rainures délimitent des portions de matière plus sensibles à la déformation comparativement aux portions délimitées par des incisions. En effet, dans le cas d'incisions les parois de matière délimitant ces incisions peuvent venir en contact les unes sur les autres au moins dans le passage dans la région de contact avec la chaussée. Cette diminution de rigidité, dans le cas de la présence de rainures, induit une augmentation des déformations et génère une diminution de la performance en usure de la bande : on observe une usure plus importante pour une distance parcourue fixée (ceci correspond à une augmentation de la vitesse d'usure de la bande). En outre, on constate une augmentation de la résistance au roulement et donc de la consommation des véhicules équipés de tels pneus, résultant d'une augmentation des pertes hystérétiques liées aux cycles de déformations de la matière composant la bande de roulement.

Document WO 02/38 399 décrit une bande de roulement selon le préambule de la revendication 1.

Un objet de l'invention est de proposer une bande de roulement pourvue de rainures et d'incisions permettant d'avoir une performance égale ou supérieure à la performance minimale de sécurité en drainage et cela quel que soit le niveau d'usure de cette bande tout en améliorant sensiblement la performance en durée de vie sur usure, réduisant la résistance au roulement et en améliorant l'endurance de la bande de roulement aux agressions.

Afin d'atteindre cet objectif, il est proposé une bande de roulement pour pneu selon la revendication 1. Il s'agit d'une bande de roulement pour pneu d'épaisseur totale E ayant une surface de roulement destinée à venir en contact avec la chaussée, cette bande comprenant au moins deux couches d'usure dans son épaisseur, c'est-à-dire au moins une première et une deuxième couches d'usure dans son épaisseur. La première couche est la couche la plus à l'extérieur quand la bande est neuve et elle vient en contact la première avec la chaussée. Par ailleurs, cette bande comprend - au moins une rainure continue formée par une pluralité de cavités externes s'ouvrant sur la surface de roulement à l'état neuf et une pluralité de cavités internes, ces dernières étant placées radialement et en totalité à l'intérieur de la surface de roulement à l'état neuf.

Par couche d'usure, on entend, dans la présente demande, une partie de la bande de roulement liée à la profondeur maximale des rainures dans ladite couche d'usure. Une couche d'usure a une épaisseur qui est inférieure à l'épaisseur totale de la bande de roulement et qui est égale à la profondeur maximale des rainures ou cavités présentes dans cette couche d'usure. Les bandes de roulement de l'invention comprennent au moins deux couches d'usure dont certaines des rainures ou cavités ne sont formées que dans une desdites couches. Il est bien sûr possible et même avantageux que dans cette configuration, chaque couche d'usure devienne active avant qu'une précédente couche d'usure soit totalement usée ; dans un tel cas on a un recouvrement entre au moins deux couches d'usure. Une couche d'usure devient active dès lors que les cavités ou rainures formées dans cette couche s'ouvrent sur la surface de roulement du pneu en contact avec la chaussée pour drainer l'eau présente sur ladite chaussée par temps de pluie. La première couche d'usure correspond à la partie de la bande de roulement radialement le plus à l'extérieur à l'état neuf.

La première couche d'usure s'étend, à partir de la surface de roulement de la bande à l'état neuf, dans l'épaisseur de la bande de roulement jusqu'aux points radialement les plus à l'intérieur des cavités externes. Par radialement les plus à l'intérieur il faut entendre les points les plus distants de la surface de roulement à l'état neuf.

Après cette première couche d'usure, on définit une autre couche d'usure comme la couche s'étendant dans la profondeur de la bande jusqu'aux points radialement les plus à l'intérieur des cavités internes de l'autre couche d'usure considérée. Cette couche s'étend à partir des points radialement les plus à l'extérieur des cavités internes.

Les cavités externes ont une profondeur moyenne P1 inférieure à l'épaisseur totale E de la bande de roulement, une longueur moyenne L1 et une section transversale, dans un plan de coupe perpendiculaire à la surface de roulement, d'aire S1 (ces dispositions préférentielles s'appliquent à toutes les variantes décrites dans le présent document).

Les cavités internes ont une hauteur moyenne P2 inférieure à l'épaisseur totale E de la bande de roulement (cette hauteur étant mesurée entre les points radialement les plus à l'extérieur et les points radialement les plus à l'intérieur des parois délimitant lesdites cavités), une longueur moyenne L2 et une section transversale d'aire S2 (ces dispositions préférentielles s'appliquent à toutes les variantes décrites dans le présent document).

Toutes ces cavités d'une même rainure continue sont telles que la différence entre les longueurs moyennes des cavités internes et des cavités externes est au plus égale à 20% de la longueur moyenne la plus grande (c'est-à-dire 0,8 ≤ L1/L2 ≤ 1,2), et la différence des aires moyennes des sections transversales des cavités internes et externes est au plus égale à 20% de l'aire moyenne la plus grande (c'est-à-dire 0,8 ≤ S1/S2 ≤ 1,2).

En outre, chaque cavité externe d'une rainure continue est reliée à au moins deux cavités internes de la même rainure par des canaux de liaison assurant la continuité entre lesdites cavités internes et externes. Chaque canal de liaison a deux extrémités connectées à une cavité interne d'une part et à une cavité externe d'autre part ; chaque canal de liaison présente des sections transversales (dans un plan de coupe perpendiculaire à la direction moyenne de la rainure) dont les aires sont égales respectivement aux aires des sections transversales des cavités interne et externe reliées par ce canal de liaison.

Cette bande comprend en outre une pluralité d'incisions s'ouvrant sur la surface de roulement de la bande à l'état neuf, chacune desdites incisions reliant deux cavités externes consécutives d'une même rainure et au moins deux canaux de liaison et au moins une cavité interne.

Grâce à la présence de ces cavités de liaison, il est possible d'assurer une circulation de l'eau d'une cavité externe vers un cavité interne d'une même rainure et ainsi d'obtenir un meilleur drainage de l'eau dans le contact en réduisant les pertes de charges hydrodynamiques.

Chaque couche a une épaisseur au plus égale à 75% de l'épaisseur totale E de la bande de roulement (chaque couche d'usure comprenant des rainures ou cavités qui lui sont propres et qui ne se retrouvent pas en totalité dans une autre couche),

Avantageusement, l'épaisseur de bande de roulement radialement à l'extérieur de chaque cavité interne est supérieure à 25% de l'épaisseur totale E de la bande de roulement.

Les cavités externes et les cavités internes ont préférentiellement des profondeurs moyennes au plus égales à 75% de l'épaisseur totale E de la bande de roulement.

Grâce à cette structure de bande de roulement, on obtient un volume de creux approprié pour réaliser un drainage satisfaisant tout en limitant la diminution de rigidité de la bande de roulement à l'état neuf, ce volume de creux étant formé par les cavités externes dans un premier temps d'utilisation puis par les seules cavités internes dans un autre temps d'utilisation, ces cavités internes et externes étant reliées entre elles par des canaux de liaison. La rainure selon l'invention peut être assimilée à une rainure continue s'ouvrant de façon régulière et discontinue sur la surface de roulement de la bande de roulement à l'état neuf. Cette rainure peut prendre une forme générale ondulée coupant la surface de roulement à l'état neuf. C'est la présence de matière caoutchoutique radialement à l'extérieur des cavités internes et radialement à l'intérieur des cavités externes qui permet d'obtenir une augmentation de la rigidité de la bande en compression notamment.

Par la réduction du taux de creux surfacique à l'état neuf, la bande de roulement selon l'invention présente en outre l'avantage d'être moins sensible à la rétention de cailloux et offre donc une meilleure résistance aux cassures en fond de rainures causées par la pénétration des cailloux dans la matière caoutchoutique. Par taux de creux surfacique, on entend ici le ratio entre la surface des cavités externes ouvertes sur la surface de roulement et la surface totale de ladite bande. Le fait que les cavités internes d'une même rainure ne débouchent pas sur la surface de roulement à l'état neuf permet effectivement de réduire le taux de creux à l'état neuf, tout en ayant un drainage efficace dans la rainure.

De façon préférentielle, la bande de roulement selon l'invention est telle que des cavités internes sont agencées dans l'épaisseur de la bande pour déboucher sur l'extérieur de la bande après usure partielle, cette usure partielle étant inférieure à l'usure totale de la première couche d'usure. Par usure partielle inférieure, il faut comprendre que la réduction d'épaisseur de la bande consécutive à l'usure est inférieure à la réduction d'épaisseur correspondant à l'usure de la première couche, c'est-à-dire correspondant à la disparition des cavités externes. Dans cette configuration avantageuse, on dit que la distance de recouvrement entre les couches d'usure est positive.

Préférentiellement, cette distance de recouvrement entre les couches d'usure est inférieure à la moitié de la profondeur P1 des premières cavités.

Cette variante présente l'avantage d'assurer une quasi constance du volume de creux utile pour drainer l'eau présente dans le contact avec la chaussée et cela quel que soit le niveau d'usure de la bande.

De façon préférentielle, la bande de roulement selon l'invention est telle que chaque canal de liaison reliant une cavité externe à une cavité interne d'une même rainure a une longueur Li plus grande que zéro et inférieure à la longueur circonférentielle L1 des cavités externes. (Li mesure la longueur la plus petite dans la direction circonférentielle entre une extrémité de la cavité externe et une extrémité de la cavité interne). Préférentiellement, la longueur Li de chaque canal de liaison est plus grande que zéro et au plus égale à 50% de L1.

Dans une variante de l'invention, la bande de roulement est telle que les cavités internes et externes de deux couches d'usure successives d'une même rainure ne se chevauchent pas - en totalité ou partiellement - dans la direction de l'épaisseur de la bande, c'est-à-dire qu'elles sont en totalité décalées l'une de l'autre dans la direction moyenne de la rainure. La direction moyenne d'une rainure correspond à la direction selon laquelle la rainure permet l'écoulement de l'eau lors d'un roulage sur chaussée revêtu d'eau ; cette direction correspond en général à la direction de plus grande dimension de la rainure.

Cette variante selon laquelle les cavités internes et externes ne se chevauchent pas - en totalité ou en partie - dans l'épaisseur présente l'avantage de minimiser les pertes de charge hydrodynamique dans le trajet suivi par l'eau des cavités externes vers les cavités internes. Dans le cas d'un chevauchement ou superposition - en totalité ou en partie - des cavités externes et internes, cela signifie qu'une extrémité d'une cavité externe est situé au delà d'une extrémité d'une cavité interne ce qui est dans la portée de la présente invention mais considéré comme moins favorable d'un point de vue de l'écoulement de l'eau dans la rainure.

Selon un mode avantageux de réalisation de l'invention le volume total de creux est au moins égal à 7% et au plus égal à 12% du volume total V de la bande de roulement.

Selon un autre mode avantageux de réalisation de l'invention, le volume de creux efficace Ve (à l'état écrasé) pour chaque couche d'usure, satisfait la relation suivante :

$$0.4 \text{ Se} < \text{Ve} < 0.8 \text{ Se,}$$

dans laquelle, 0.4 et 0.8 sont des hauteurs exprimées en millimètre et Se est la surface (en mm$^2$) délimitée par le contour externe de l'empreinte de contact de la bande de roulement mesurée en statique dans les conditions de charge et de pression nominales, le pneu étant monté sur sa jante recommandée,

Les hauteurs de 0.4 mm et 0.8 mm correspondent à des hauteurs moyenne d'eau qui peuvent être présentes sur une chaussée par temps de pluie et qu'il faut pouvoir drainer pour maintenir un bon contact entre la bande de roulement et la chaussée. Ces hauteurs moyennes multipliées par la surface Se - surface déterminée par le contour de l'empreinte de contact de la bande de roulement sur la même chaussée et exprimée en mm$^2$ (les surfaces correspondant aux cavités s'ouvrant sur la surface de roulement de la bande sont ici prises en compte) - sont à même de fournir une indication du volume de cavité efficace Ve (à l'état écrasé). Si ce volume Ve est inférieur à 0.4 fois Se, il n'est pas suffisant pour obtenir un drainage satisfaisant. Si ce volume Ve est supérieur à 0.8 fois Se alors il est jugé surabondant d'un point de vue de l'obtention d'une rigidité appropriée de la bande.

Le volume de creux efficace Ve dans le contact contribue à drainer la région de contact entre la bande de roulement et une chaussée.

Afin notamment d'augmenter le taux de creux surfacique de la bande dans le contact avec une chaussée (rapport entre la surface de creux débouchant sur la surface de roulement de la bande de roulement à l'état neuf et la surface totale de la zone de contact avec la chaussée), la bande de roulement comprend au moins une rainure formée d'une pluralité de paires de cavités externes qui sont prolongées chacune par un canal de liaison, ces canaux de liaison débouchant dans une même cavité interne. Le volume de cette cavité interne peut être sensiblement réduit par rapport au volume des cavités externes ou adapté par la personne du métier selon la performance recherchée et selon le pneu concerné.

Dans une autre variante, le volume de creux efficace Ve augmente avec le niveau d'usure de la bande de roulement, donc augmente en passant d'une couche d'usure à la suivante.

Dans une autre variante, la bande de roulement selon invention comprend au moins une rainure dont les cavités externes sont chacune prolongée à ses deux extrémités par deux canaux de liaison, ces canaux de liaison débouchant chacune dans des cavités internes distinctes. En outre, chaque cavité interne, ainsi que les canaux de liaison qui relient cette cavité interne à deux cavités externes, sont prolongés radialement vers la surface de roulement de la bande de roulement à l'état neuf par une incision pour perniettre le moulage et le démoulage de la bande de roulement selon l'invention.

Ce qui a été décrit pour une bande comprenant deux couches d'usure peut aisément s'appliquer à un nombre de couches d'usure supérieur à deux et notamment à trois couches d'usure. Dans cette variante, la bande de roulement selon l'invention comprend des cavités additionnelles situées dans une troisième couche d'usure prolongeant radialement à l'intérieur la deuxième couche d'usure. Ces cavités additionnelles sont reliées aux cavités internes de la deuxième couche d'usure par des canaux de liaison additionnels. Ces cavités additionnelles déterminent un troisième niveau d'usure et s'ouvrent sur la surface de roulement après une usure de la bande ayant quasiment supprimé les deuxièmes cavités. Une application de cette variante est particulièrement intéressante dans le cas de pneu ayant des bandes de roulement de grande épaisseur.

Les rainures continues formées d'une succession de cavités externes et internes reliées par des canaux de liaison, objet de l'invention, peuvent être orientées dans une direction quelconque sur la bande ou sur le pneu (c'est-à-dire longitudinalement ou transversalement ou en oblique par rapport à l'une ou l'autre de ces directions).

Avantageusement des rainures selon l'invention sont orientées essentiellement dans une direction correspondant à la plus grande dimension de la bande : soit la direction longitudinale de la bande soit la direction circonférentielle lorsque cette bande équipe un pneu.

Dans une variante particulièrement intéressante, une bande selon l'invention comprend une première pluralité de rainures continue selon invention dans une première direction et une deuxième pluralité de rainures continues selon l'invention dans une deuxième direction croisant la première direction pour former un réseau de rainures croisées. Avantageusement, ces première et deuxième pluralités de rainures selon l'invention sont agencées de manière que les cavités internes de ces première et deuxième pluralités de rainures soient connectées entre elles afin de renforcer l'effet de réseau. Par connectées entre elles, il faut comprendre que la circulation de fluide est possible entre les différentes cavités internes des deux pluralités de rainures.

Dans une variante intéressante, une bande selon l'invention comprend une première pluralité de rainures selon l'invention dans une première direction et une deuxième pluralité de rainures selon l'invention dans une deuxième direction croisant la première direction pour former un réseau de rainures continues croisées. Ces première et deuxième pluralités de rainures selon l'invention peuvent être agencées de manière que les cavités internes de ces première et deuxième pluralités de rainures soient disposées à des profondeurs différentes afin d'obtenir, dans ce cas, un taux de creux sensiblement constant quel que soit le niveau d'usure de la bande. Par taux de creux, il faut comprendre le rapport entre la surface de creux sur la surface de roulement considérée et la surface totale de la bande de roulement au niveau d'usure considéré. Les cavités internes, quand bien même elles sont reliées à des cavités externes, ne sont pas considérées conférer un taux de creux en surface de roulement avant qu'elles n'apparaissent sur une nouvelle surface de roulement après usure de la bande.

Dans une autre variante, on peut prévoir la présence d'au moins un canal orienté dans une direction parallèle à la direction moyenne d'une rainure continue formée d'une succession de cavités externes et internes, ce canal étant situé à une profondeur correspondant à celle des cavités internes de ladite rainure et ce canal se prolongeant par une incision soit vers la surface de roulement de la bande de roulement soit vers la surface interne de ladite bande. Par surface interne d'une bande, on entend la surface par laquelle la bande est en contact avec le pneu qu'elle équipe. Ces incisions et canaux peuvent aisément être réalisés au moment du moulage de la bande. La section transversale de ce canal est déterminée pour que lors de l'ouverture du canal sur la surface de roulement après une usure de la bande, il se forme une nouvelle rainure de section transversale appropriée à un bon écoulement de l'eau présente par temps de pluie sur la route. Ce canal est prévu pour former une nouvelle rainure en s'ouvrant sur la surface de roulement après une usure partielle au plus égale à l'épaisseur de la première couche d'usure.

Dans cette variante, la bande de roulement peut en outre comprendre des moyens pour mettre en communication au moins un canal avec une pluralité de cavités internes d'une rainure continue. Ainsi le pouvoir de drainage de l'eau lors du roulage sur chaussée revêtue d'eau est amélioré au moins à partir d'une usure partielle voyant le canal déboucher sur la surface de roulement et former une nouvelle rainure.

Pour maintenir un niveau satisfaisant de rigidité de la bande de roulement selon l'invention il est avantageux que les incisions prolongeant les cavités internes et externes soient pourvues de moyens de blocage mécanique des déplacements relatifs des parois en vis-à-vis délimitant lesdites incisions. De tels moyens peuvent prendre la forme d'ondulation des parois en vis-à-vis ou encore de reliefs moulés sur lesdites parois et appropriés pour coopérer ensemble.

L'invention concerne également un pneu pourvu d'une bande de roulement définie selon l'invention, cette bande de roulement surmontant radialement à l'extérieur une enveloppe de pneu constituée d'une armature de carcasse et d'une armature de sommet. La bande de roulement de ce pneu est réalisée comme l'une des variantes précédentes, certaines dimensions des rainures étant liées à la longueur moyenne de la surface de contact de la bande avec la chaussée dans les conditions nominales d'usage du pneu, ces conditions nominales d'usage étant définies dans les standards de l'E.R.T.O. ou de la J.A.T.M.A..

Il est avantageux qu'il y ait, pour chaque rainure orientée circonférentiellement et formée de cavités s'ouvrant sur la surface de roulement et de cavités sous la surface de roulement, au moins une cavité externe en permanence dans le contact afin de permettre un drainage. Si on note T la longueur moyenne de la surface de contact avec la chaussée dans les conditions nominales d'usage du pneu pourvu d'une bande de roulement selon l'invention (cette longueur moyenne étant obtenue en divisant l'aire totale délimitée par le contour externe de cette surface de contact par la largeur W de ladite surface), il est encore plus préférentiel que la longueur moyenne des cavités externes des rainures circonférentielles soit comprise entre 25% et 75% de la longueur moyenne T de la surface de contact.

Dans une variante non montrée, la bande de roulement comprend une pluralité de rainures formées d'une pluralité de cavités externes et de cavités internes reliées par des canaux de liaison orientés dans la direction longitudinale de la bande, ces rainures étant disposées de manière à ce que les cavités externes s'ouvrant sur la surface de roulement à l'état neuf soient disposées de manière à être toutes décalée les unes par rapport aux autres et en ce que les cavités internes soient également disposées de manière à être toutes décalées les unes par rapport aux autres. L'avantage d'une telle disposition est de limiter la réduction de rigidité de cisaillement de la bande notamment sous effort transversal (par exemple en virage).

D'autres caractéristiques et avantages de l'invention ressortent de la description faite ci-après en référence aux dessins annexés qui montrent, à titre d'exemples non limitatifs, des formes de réalisation de l'objet de l'invention.

## Description des figures

La figure 1 montre une vue partielle de la surface de roulement d'une bande de roulement comprenant une rainure continue selon l'invention ;

La figure 2 montre une vue en coupe selon une ligne II-II prise sur la bande de roulement de la figure 1 ;

La figure 3 montre une vue en coupe selon une ligne III-III prise sur la bande de roulement de la figure 1 ;

La figure 4 montre une vue en coupe selon une ligne IV-IV prise sur la bande de roulement de la figure 1 ;

La figure 5 montre en coupe une variante de réalisation selon laquelle il est prévu un canal continu entièrement situé sous la surface de roulement de la bande ;

La figure 6 montre un vue partielle d'une bande de roulement selon l'invention à l'état neuf ;

La figure 7 montre la vue en plan de la surface de roulement de la bande de roulement de la figure 6 ;

La figure 8 montre la vue en plan de la surface de roulement de la bande de roulement de la figure 7 après une usure de la bande atteignant la deuxième couche d'usure ;

La figure 9 montre partiellement une variante d'une rainure continue ayant une paire de cavités externes reliées à une cavité interne ;

La figure 10 montre partiellement une variante d'une rainure continue ayant une cavité externe reliée à deux cavités internes ;

La figure 11 montre partiellement une variante selon laquelle une bande de roulement est pourvue de rainures selon l'invention orientées dans deux directions se croisant, ces rainures étant connectées entre elles ;

La figure 12 montre une variante de l'invention selon laquelle les incisions reliant les cavités internes et les canaux de liaison à la surface de roulement sont pourvues de puits débouchant sur la surface de roulement ;

La figure 13 montre en coupe une variante de bande de roulement selon l'invention pour laquelle les inclinaisons des canaux de liaison aux extrémités d'une cavité interne sont différentes ;

La figure 14 montre une variante selon laquelle les rainures et incisions suivent des trajectoires ondulées ;

Les figures 15a et 15b montrent une variante selon laquelle les cavités externes d'une même rainure continue sont prolongées vers l'intérieur de la bande par une incision pourvue de moyens de blocage ;

La figure 16 montre une variante de bande de roulement comprenant trois couches d'usure ;

La figure 17 montre une autre variante de bande de roulement comprenant trois couches d'usure ;

La figure 18 montre une variante d'une bande de roulement comportant, outre des rainures continues formées d'une succession de cavités externes et internes, des canaux transversaux débouchant sur l'extérieur de la bande de roulement et connectés à des cavités internes des rainures continues.

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

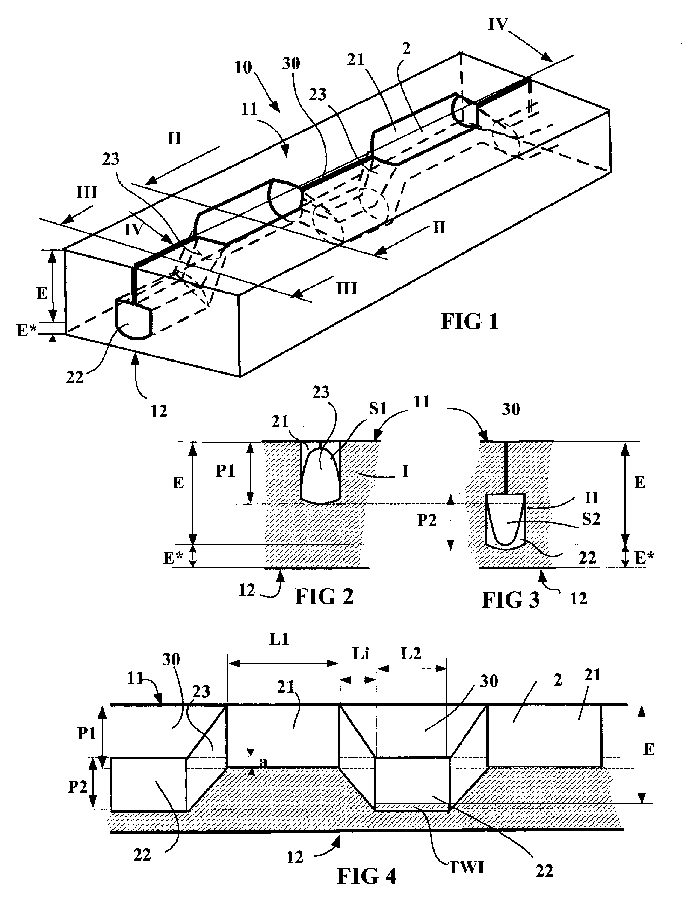

La figure 1 montre une partie d'une bande de roulement 10 à l'état neuf, cette bande ayant une épaisseur E, une surface de roulement 11 destinée à venir en contact avec la chaussée pendant le roulage et une surface 12 définissant l'épaisseur de la bande et située à l'opposée de la surface de roulement 11. Cette partie de bande comprend une rainure continue 2 selon l'invention. La rainure 2 est formée d'une succession d'une pluralité de cavités externes 21 de forme allongée de longueur L1 et débouchant sur la surface de roulement 11 à l'état neuf, et d'une pluralité de cavités internes 22 de longueur L2 situées entièrement à l'intérieur de la bande de roulement à l'état neuf. Des canaux de liaison 23 sont formés pour relier les cavités internes 22 et les cavités externes 21 et assurer ainsi la continuité de la rainure 2 dans la direction principale de la rainure. Ces canaux de liaison 23 ont une longueur Li mesurée dans la direction principale de la rainure. Afin d'assurer un bon écoulement de liquide entre les cavités internes et externes, les canaux de liaison présentent une extrémité connectée à une cavité externe, cette extrémité ayant une section transversale égale à la section transversale de ladite cavité externe. Ces mêmes canaux de liaison présentent une autre extrémité connectée à une cavité interne, cette autre extrémité ayant une section transversale égale à la section transversale de ladite cavité interne. Dans le cas présent, les sections transversales des cavités externe et interne sont sensiblement identiques et chaque canal de liaison conserve sensiblement la même section transversale d'une de ses extrémités à l'autre extrémité. On pourrait bien entendu modifier et faire varier cette section transversale entre les deux extrémités.

Avec une rainure 2 selon l'invention, tout se passe comme si on avait une bande de roulement ayant deux couches d'usure I et II se succédant au cours de l'utilisation de la bande, chaque couche d'usure ayant des cavités différentes sur la surface de roulement. Une première couche I voit apparaître les cavités externes 21 sur la surface de roulement et une deuxième couche II voit apparaître les cavités internes 23 successivement sur une nouvelle surface de roulement. Avant de voir apparaître les cavités internes, les canaux de liaison continuent de jouer leur rôle et notamment d'assurer la continuité de la rainure.

La figure 2 montre une coupe de la figure 1 dans un plan de coupe repéré II-II sur la figure 1.

Sur cette figure 2 on voit la section transversale d'une cavité externe 21 ayant une aire S1 et s'étendant dans la bande sur une profondeur P1 égale à environ 74.5% de l'épaisseur totale E de la bande (cette épaisseur correspondant à l'épaisseur pouvant être usée en roulage).

Cette cavité externe 21 est prolongée de part et d'autre par des canaux de liaison 23 la reliant à des cavités internes 22 visibles en coupe transversale sur la figure 3.

La figure 3 montre une coupe de la figure 1 dans un plan de coupe repéré III-III sur la figure 1.

Sur cette figure 3 on voit la section transversale d'une cavité interne 21 ayant une aire S2 sensiblement égale à l'aire S1 des cavités externes 21 et se prolongeant vers la surface de roulement de la bande par une incision.

Cette cavité interne 22 a des dimensions comparables à celles des cavités externes 21 ; les longueurs respectives L1 et L2 (voir sur la figure 4) des cavités externes et internes sont ici sensiblement égales. Afin que la bande présente toujours des éléments de rainure sur sa surface de roulement quel que soit l'état d'usure de la bande, il est avantageux, comme c'est le cas ici, que les cavités internes 22 d'une même rainure 2 apparaissent avant que les cavités externes 21 aient disparu en totalité. On forme ainsi une première couche d'usure I s'étendant entre la surface de roulement de la bande à l'état neuf et les points les plus à l'intérieur des cavités externes 21 ; une deuxième couche s'étend jusqu'aux points des cavités internes 22 les plus à l'intérieur de la bande. Bien entendu, il est possible de prévoir que les deuxièmes cavités n'apparaissent qu'après que les premières aient totalement disparu par usure.

La figure 4 montre une coupe de la figure 1 dans un plan de coupe repéré IV-IV sur la figure 1.

Sur cette figure 4 on distingue la succession de cavités externes 21 et de cavités internes 22 reliées entre elles par des canaux de liaison 23 de longueur Li. Par ailleurs une incision 30 débouchant sur la surface de roulement 11 à l'état neuf relie une cavité interne 22, deux canaux de liaison 23 et deux cavités externes 21. Cette incision 30 est positionnée dans la bande de façon à déboucher sur la surface de roulement 11 à l'état neuf afin de faciliter le moulage et le démoulage de la rainure selon l'invention. On peut bien entendu prévoir que cette incision débouche sur la face 12 de la bande qui est opposée à cette surface de roulement 11 : dans ce cas il faut prévoir de mouler la bande avec ses rainures et incisions avant de l'associer à un bandage pour former un pneu.

Lorsque la première couche d'usure I est totalement usée, les cavités initialement internes 22 débouchent sur la nouvelle surface de roulement et compte tenu de la hauteur restante de bande à user peuvent être parfois suffisantes pour servir de réservoir à l'eau présente sur la chaussée.

Tout se passe comme si la rainure 2 suivait un tracé ondulé dans la direction radiale (c'est-à-dire dans l'épaisseur de la bande), cette rainure comportant une succession de parties (cavités externes) s'ouvrant sur la surface de roulement à l'état neuf et en alternance des parties (cavités internes) en totalité à l'intérieur de la bande de roulement à l'état neuf, les cavités de liaison assurant une continuité entre les volumes desdites cavités internes et externes (c'est-à-dire la possibilité de faire circuler un fluide de l'extérieur vers l'intérieur et réciproquement). Ainsi, au passage dans le contact avec la chaussée, de l'eau présente sur cette chaussée peut être drainée par les cavités externes vers les cavités internes. Il est bien sûr nécessaire qu'il y ait toujours au moins une cavité externe ouverte en totalité ou en partie dans l'empreinte de contact avec la chaussée. Les dimensions des cavités externes ainsi que celles des cavités internes sont déterminées de façon à respecter cette condition pour une longueur donnée de contact avec une chaussée.

Sur cette même figure 4 on distingue la présence d'un indicateur d'usure TWI qui fixe l'épaisseur totale de bande de roulement pouvant être usée en roulage. Cet indicateur est moulé sur le fond d'une cavité interne 22 et a une hauteur égale dans le cas présent à 1.6 mm pour correspondre aux prescriptions légales.

Grâce à ces dispositions, il est possible d'avoir à l'état neuf une rigidité d'ensemble qui est plus importante qu'avec des rainures usuelles qui auraient chacune une profondeur totale égale à la distance des points les plus à l'intérieur des cavités internes par rapport à la surface de roulement à l'état neuf. Au moins dans la première partie d'usage de la bande (c'est-à-dire jusqu'à user 75% de la profondeur des cavités externes), la fonction de drainage et de captage de l'eau est réalisée par cette rainure puisque l'eau récupérée dans les cavités externes peut s'écouler dans les canaux de liaison et les cavités internes. L'eau ainsi drainée peut alors ressortir par une autre cavité externe. De manière avantageuse les raccordements entre les différentes cavités sont appropriés pour ne pas nuire à l'écoulement de fluide à l'intérieur de la rainure.

Lorsque la première couche d'usure I est totalement usée, les cavités internes 22 s'ouvrent sur toute leur longueur sur la surface de roulement et peuvent alors servir de réservoir pour emmagasiner une partie de l'eau présente sur la chaussée.

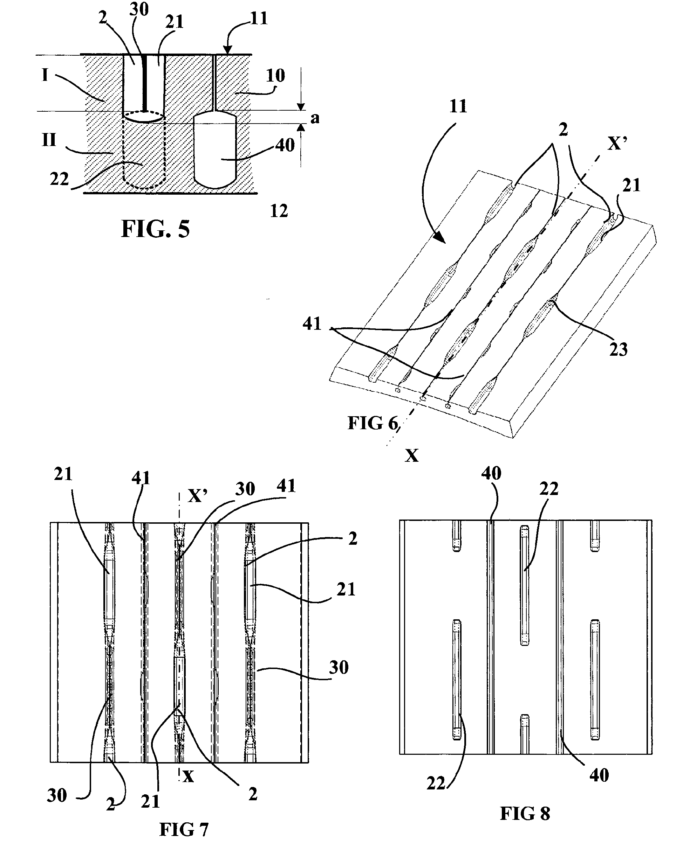

Toutefois, il est alors avantageux, comme le montre la figure 5 de combiner avec cette rainure la présence d'un canal continu 40 d'orientation générale identique ou sensiblement identique à celle de la rainure 2 et dont la fonction est de former une nouvelle rainure continue qui apparaît et débouche sur la surface de roulement après une usure partielle telle que les cavités internes 22 de la seconde couche d'usure II sont également apparues sur ladite nouvelle surface de roulement. La fonction d'écoulement de l'eau est alors préservée puisque le canal 40 est devenu une rainure continue apte à drainer et à écouler l'eau, les cavités internes 22 de la rainure 2 selon l'invention formant des réservoirs de rétention de l'eau discontinus les uns des autres dans cette variante.

Sur cette figure 5 montrant une coupe d'une portion d'une bande de roulement selon l'invention on distingue la présence d'une rainure 2 comprenant une pluralité de cavités externes 21 et de cavités internes 22 reliées par des canaux de liaison 23, et celle d'un canal 40 dont la section transversale a une aire appropriée pour permettre un écoulement de l'eau dès qu'une nouvelle rainure est formée après usure partielle de la bande correspondant à la profondeur d'apparition du canal 40 sur la nouvelle surface de roulement.

Préférentiellement, les canaux formés à l'intérieur de la bande de roulement sont dimensionnés pour offrir un volume de drainage approprié et en particulier ces canaux peuvent avoir des hauteurs sensiblement égales à la hauteur des cavités internes. Dans cette variante, il est possible de maintenir quasiment constant voire constant le volume de creux utile pour le drainage de l'eau sur la chaussée et cela tout au long de la durée d'utilisation du pneu pourvu d'une bande de roulement telle que décrite.

Des rainures continues formées d'une pluralité de cavités internes et de cavités externes selon l'invention peuvent être orientées dans une direction quelconque dans une bande de roulement pour pneu.

Des rainures continues et ondulantes dans l'épaisseur selon l'invention peuvent être formées dans une bande de roulement de manière à ne pas s'ouvrir sur la surface de roulement à l'état neuf mais seulement après une usure partielle de la bande. Bien entendu, il est judicieux de les combiner avec :

[0099] - soit des rainures de faible profondeur, lesquelles sont progressivement remplacées par les rainures selon l'invention

[0100] - soit des rainures selon l'invention s'ouvrant à l'état neuf de la bande sur la surface de roulement.

Il est prévu un chevauchement a entre les cavités externes et internes de façon qu'après usure partielle de la bande de roulement, les cavités internes s'ouvrent sur la surface de roulement avant la complète disparition des cavités externes.

On présente maintenant un autre exemple de réalisation d'un pneu de dimension **315/70 R 22.5** comprenant une bande de roulement selon l'invention.

La figure 6 représente une partie seulement de cette bande de roulement dont la direction longitudinale est indiquée par la direction de l'axe XX' sur cette figure. Cette bande est de largeur W égale à 258 mm et a une épaisseur totale E égale à 9.4 mm mesurée comme la distance séparant la surface de roulement du pneu à l'état neuf et les indicateurs d'usure (ces indicateurs d'usure sont positionnés de manière à indiquer une hauteur de rainure égale à 1.6 mm). Par ailleurs, une épaisseur E* complémentaire (ici égale à 6.6 mm) est prévue entre la bande de roulement et l'armature de sommet du pneu. Cette bande est pourvue de trois rainures continues 2 d'orientation longitudinale (c'est-à-dire circonférentielle une fois cette bande incorporée dans un pneu), chacune de ces rainures étant formées d'une succession de cavités externes 21 et internes 22, les cavités externes 21 s'ouvrant sur la surface de roulement 11 de la bande de roulement à l'état neuf et les cavités internes 22 étant entièrement formées sous la surface de roulement à l'état neuf.

Des canaux de liaison 23 relient les cavités externes aux cavités internes. Chaque canal de liaison a une extrémité d'aire égale à l'aire de la section transversale de la cavité externe à laquelle elle est connectée et à son autre extrémité d'aire égale à l'aire de section transversale de la cavité interne à laquelle est également reliée. Toutes ces rainures continues 2 ont leur direction principale sensiblement orientées dans la direction longitudinale de la bande. De manière alternative des canaux de liaison d'aire de section inférieure aux aires de section des cavités internes ou externes peuvent être également employés.

Dans le cas présent, la longueur L1 de chaque cavité externe est égale à 150 mm et la longueur L2 de chaque cavité interne est égale à 110 mm ; la longueur Li des canaux de liaison est égale à 15 mm.

Chaque cavité externe 21 a une largeur moyenne égale à 12 mm et une profondeur de 7 mm (soit 74.5% de l'épaisseur totale E). Les parois délimitant une cavité externe font un angle moyen de 15 degrés avec une perpendiculaire à la surface de roulement et tendent à converger l'une vers l'autre en allant vers le fond de ladite cavité.

Chaque cavité interne a une largeur moyenne égale à 9 mm et une profondeur de 7 mm (soit 74.5% de l'épaisseur totale E). Les parois délimitant une cavité interne font un angle moyen de 15 degrés avec une perpendiculaire à la surface de roulement et tendent à converger l'une vers l'autre en allant vers le fond de ladite cavité.

Par ailleurs les cavités internes 22 et les canaux de liaison 23 sont prolongées vers la surface de roulement par des incisions 30 dont les parois les délimitant sont pourvues de motifs en creux et en relief interagissant entre eux pour limiter autant que faire se peut les déplacements relatifs entre lesdites parois et ainsi conserver une plus grande rigidité. Dans le cas présent la distance moyenne séparant les parois en vis-à-vis d'une même incision est égale à 0,4 mm. On constate que les cavités externes 21 sont sensiblement de mêmes dimensions et qu'elles sont disposées de manière à être décalées les unes des autres dans la direction longitudinale afin de réduire l'impact sur le bruit de roulage et d'augmenter l'efficacité de récupération de l'eau lors d'un roulage sur sol revêtu d'eau.

Il est prévu un chevauchement égal à 3 mm entre les cavités externes et internes de façon qu'après usure partielle de la bande de roulement, les cavités internes s'ouvrent sur la surface de roulement avant la complète disparition des cavités externes.

La figure 7 montre la vue en plan de la surface de roulement de la bande de roulement de la figure 6 lors de la présence de la première couche d'usure en contact avec la chaussée. On observe que la surface de roulement comprend trois rainures continues orientées circonférentiellement et intercalées axialement entre elles deux incisions prolongées radialement à l'intérieur par un canal 40 continu circonférentiellement.

Cette bande de roulement a un volume total de creux Vc égal à 9% d'un volume égal à la somme du volume total V de matière de la bande de roulement et du volume total de creux.

Chaque couche d'usure de cette bande de roulement a un volume total de creux efficace Ve dans la région de contact qui est égal à 40 cm$^3$. Ce volume efficace Ve, exprimé en mm$^3$, satisfait la relation 0.4 St < Ve < 0.8 St (on a 24120 < 40000 < 48240), la surface St étant exprimée en mm$^2$. Dans le cas présent, la surface St est égale à 60300 mm$^2$, cette surface étant délimitée par le contour externe de l'empreinte de contact de la bande de roulement mesurée en statique dans les conditions de charge et de pression nominales, le pneu étant monté sur sa jante recommandée.

La figure 8 montre la vue en plan de la surface de roulement de la bande de roulement de la figure 6 après une usure de la bande atteignant la deuxième couche d'usure. On aperçoit les cavités internes qui sont ouvertes sur la surface de roulement et sont discontinues les unes des autres ainsi que des nouvelles rainures circonférentielles formées par l'apparition des canaux sur la surface de roulement.

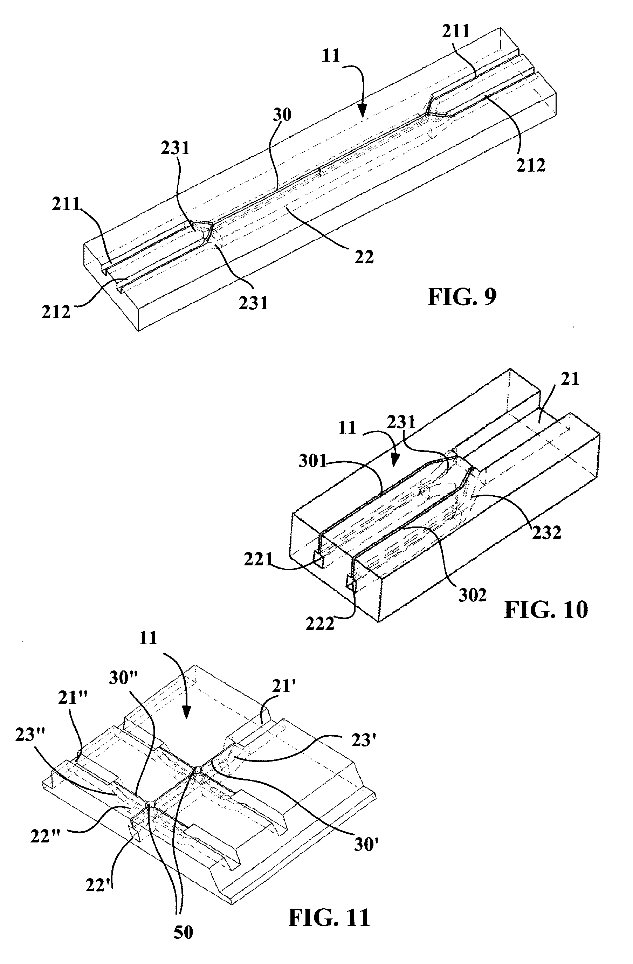

Dans une autre variante intéressante de l'invention, au moins une rainure est telle que montrée partiellement à la figure 9 à savoir qu'au moins une rainure continue 2 est formée d'une pluralité de cavités externes 211, 212 s'ouvrant sur la surface de roulement 11 à à l'état neuf, ces cavités externes 211, 212 étant formées par paire, chaque paire de premières cavités se prolongeant par des canaux de liaison 231, 232 respectivement, ces derniers canaux de liaison se rejoignant pour déboucher dans une même première extrémité d'une cavité interne 22 formée à l'intérieur de la bande. Cette cavité interne se prolonge à sa deuxième extrémité par deux canaux de liaison reliés à une nouvelle paire de premières cavités s'ouvrant sur la surface, de roulement à l'état neuf de la bande. À l'image de la variante montrée avec la figure 1 les canaux de liaison et les cavités internes sont prolongés vers la surface de roulement de la bande par une incision dont les extrémités forment localement sur la surface de roulement une trace moyenne en Y.

Cette variante permet une meilleure répartition des cavités externes débouchant sur la surface de roulement de la bande à l'état neuf.

Dans une autre variante intéressante de l'invention, au moins une rainure 2 est telle que montrée partiellement à la figure 10. Dans cette variante, une rainure 2 est formée d'une pluralité de cavités externes 21 s'ouvrant sur la surface de roulement 11, chaque cavité externe se prolongeant par deux canaux de liaison 231, 232, chaque canal de liaison débouchant à une extrémité dans une cavité interne 221, 222. Dans cette variante le nombre de cavités internes est donc double de celui du nombre de cavités externes. Cette variante permet, pour un volume de drainage choisi en fonction du résultat souhaité pour un pneu, d'obtenir une répartition des creux internes plus homogène dans la bande et ainsi une moins grande incidence sur la rigidité de la bande. Des incisions 301, 301 prolongent les cavités internes et de liaison vers la surface de roulement 11. Chaque cavité de la paire de cavités internes peut être située à une même profondeur par rapport à la surface de roulement 11 ou bien à des profondeurs différentes.

Dans une autre variante intéressante de l'invention montrée avec le support de la figure 11, une bande de roulement est pourvue d'une première pluralité de rainures d'orientation longitudinale 2' (c'est-à-dire circonférentielle sur le pneu pourvu de cette bande) et d'une deuxième pluralité de rainures 2'' d'orientation croisant la première pluralité de rainures 2'. Dans le cas présent l'angle formé par ces pluralités de rainures est égal à 90° mais il est évidemment possible d'employer tout autre valeur.

Chaque rainure 2' de la première pluralité de rainures est formée d'une pluralité de cavités internes 22' et de cavités externes 21' reliées par des canaux de liaison 23' définissant une première couche d'usure et une deuxième couche d'usure de la bande.

Chaque rainure 2'' de la deuxième pluralité de rainures est formée d'une pluralité de cavités internes 22'' et de cavités externes 21'' reliées par des canaux de liaison 23''. L'agencement de la variante montrée est tel que la position dans l'épaisseur de la bande est sensiblement identique pour les cavités internes des premières et deuxièmes rainures 2' et 2''.

En outre, il est réalisé une interconnexion entre les premières et deuxièmes rainures 2', 2'' au niveau de leurs cavités internes 22' et 22''. Les cavités internes se coupent entre elles de manière à former un réseau de cavités à la fois sur et sous la surface de roulement de la bande, ledit réseau favorisant très sensiblement le drainage de l'eau.

Par ailleurs, les cavités internes et les canaux de liaison sont prolongés vers la surface de roulement par des incisions 30' et 30'' qui se coupent et présentent à leurs intersections une sorte de puits de section circulaire 50. Ces puits 50 présentent l'avantage d'augmenter la capacité de drainage de l'eau par la bande lors d'un roulage sur sol revêtu d'eau.

Dans une variante non montrée, les première et deuxième pluralités de rainures 2', 2'' ne sont pas nécessairement orientées de manière à être perpendiculaires l'une à l'autre. On peut ainsi avoir une première pluralité de rainures orientées dans la direction circonférentielle et une deuxième pluralité de rainures orientées selon une direction faisant un angle différent de 90 degrés avec la première pluralité de rainure. On peut aussi prévoir une variante comportant en outre une troisième pluralité de rainures orientées notamment, mais non nécessairement, pour être symétrique de la deuxième pluralité de rainures 2" par rapport à la première pluralité de rainures 2'.

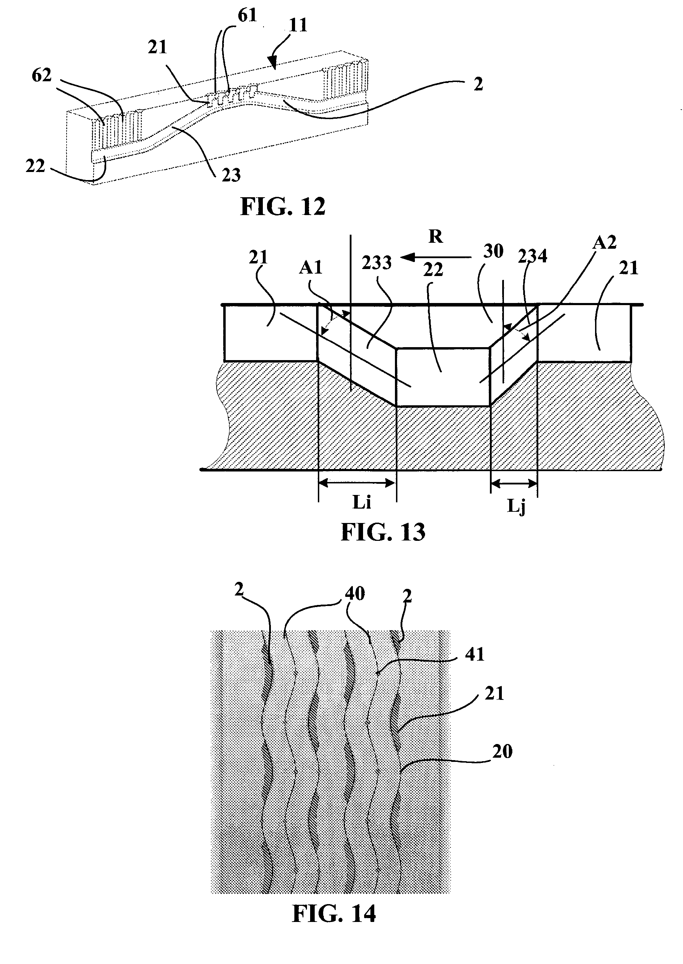

Dans une autre variante représentée à la figure 12, on montre une rainure 2 selon l'invention qui apparaît sur la surface de roulement après une faible usure partielle de la bande, c'est-à-dire que les cavités externes 21 ne débouchent pas sur la surface de roulement à l'état neuf. Par ailleurs, les cavités externes 21, les canaux de liaison 23 et les cavités internes 22 sont prolongées vers la surface de roulement par une incision 30 elle même pourvue d'une pluralité d'élargissements 61 et 62. Des élargissements 61 sont formés vers l'extérieur des cavités externes 21 et des élargissements 62 sont formés vers l'extérieur des cavités internes 22 de manière à compléter et augmenter l'effet de drainage de la rainure 2. Ces élargissements sont ,dans le cas présent, orientés sensiblement perpendiculairement à la surface de roulement ; ils pourraient être inclinés d'un angle différent de 90 degrés avec cette surface selon le besoin. Ces élargissements ont ici une forme de puits cylindriques.

La figure 13 montre une autre variante intéressante pour créer un effet directionnel de flux d'écoulement de l'eau circulant à l'intérieur de la rainure pendant le roulage d'un pneu pourvu d'une bande de roulement elle même pourvue avec au moins une rainure continue formées d'une pluralité de cavités externes 21 et internes 22 reliées par des canaux de liaison 231, 232.

Selon cette variante, les canaux de liaison 233, 234 situés de part et d'autre d'une cavité interne 22 ont des longueurs respectivement Li, Lj différentes et en conséquence présentent des inclinaisons moyennes A1 et A2 différentes (ces angles A1 et A2 sont mesurés par rapport à une direction perpendiculaire à la surface de roulement). Dans la variante préférentielle, le canal de liaison le plus incliné par rapport à une perpendiculaire à la surface de roulement (c'est-à-dire le canal de plus grande longueur) est situé du côté rentrant le premier dans le contact avec la chaussée (la flèche R indique le sens de rotation). Par ce moyen, on crée un dessin de sculpture de bande de roulement qui présente un sens de roulage préférentiel (un moyen apparent peut être apposé sur la bande où sur le pneu pour indiquer ce sens préférentiel).

Dans la variante montrée avec la figure 14, assez proche de la variante montrée avec les figures 6, 7 et 8, une bande de roulement comprend, à l'état neuf, une pluralité de rainures continues d'orientation longitudinale, ces rainures 2 étant formées d'une succession de cavités internes 22 et de cavités externes 21 reliées par des canaux de liaison 23. Afin d'augmenter l'adhérence longitudinale, ces rainures 2 suivent, sur la surface de roulement 11, un dessin de forme générale ondulée. On voit, en outre, dans la variante présentée la présence de trous formés sur chaque incision située entre deux cavités externes successives ; ces trous s'étendent de la surface de roulement aux cavités internes 22. En outre, la bande comprend une incision longitudinale 40 ayant elle aussi une forme générale ondulée sensiblement parallèle à la forme des rainures 2 ; cette incision 40 est prolongée dans l'épaisseur de la bande par un canal comme décrit précédemment, et destinée à apparaître sur la surface de roulement pour former une nouvelle rainure après une usure partielle de la bande.

Dans la variante représentée avec cette figure 14, chaque cavité (première ou deuxième) a une forme courbe, mais la personne du métier pourrait choisir toute autre forme géométrique et notamment une forme rectiligne ou en zigzag.

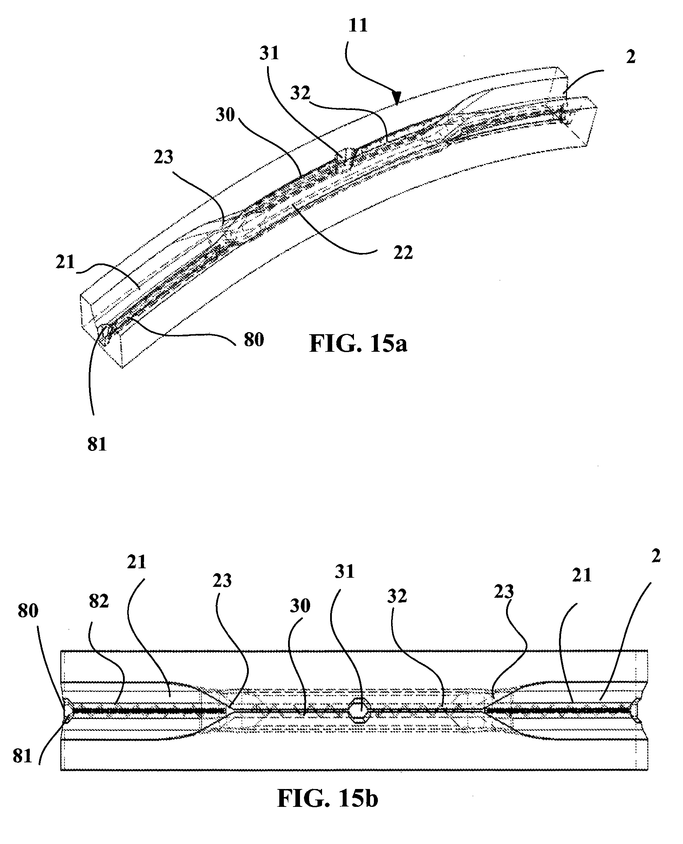

Les figures 15a et 15b montrent partiellement une bande de roulement caractérisée en ce que chaque cavité externe 21 s'ouvrant sur la bande de roulement à l'état neuf est prolongée radialement vers l'intérieur par une incision 80 jusqu'au fond de la partie usante de la bande de roulement. La figure 15a montre une vue en volume et en perspective d'une partie de la bande de roulement selon l'invention et comportant une rainure 2 continue et passant de la surface de roulement 11 à l'état neuf à une couche d'usure située à l'intérieur de la bande. Cette rainure comprend des cavités externes 21 reliées par des canaux 23 à des cavités internes 22. Dans cette variante les cavités externes 21 sont prolongés vers l'intérieur de la bande par une incision 80 dont les parois sont pourvues de moyens 82 permettant le blocage des mouvements relatifs desdites parois les unes par rapport aux autres. En outre il est prévu localement un élargissement 81 se combinant avec l'incision 80. À l'image de ce qui est prévu pour l'incision 80 située sous la cavité externe; il est prévu des moyens de blocage 32 sur l'incision 30 débouchant sur la surface de roulement, cette incision connectant entre eux deux cavités externes 21 et deux canaux de liaison 23. la figure 15b montre la même partie de bande de roulement en plan, la surface du dessin correspondant à la surface de roulement. Cette incision 30 débouchant sur la surface de roulement comprend en outre un élargissement 31 en son milieu.

L'intérêt de cette variante est d'améliorer la mise à plat de la bande de roulement dans le contact avec la chaussée, en réduisant le niveau de contraintes résultantes.

Toutes les variantes décrites jusque là montrent des bandes de roulement comprenant deux couches d'usures traversées par les rainures selon l'invention.

Dans les variantes suivantes, on représente des rainures selon l'invention qui délimitent en fait trois couches d'usure dans l'épaisseur de la bande (ce nombre de trois n'est en rien une limite mais simplement une valeur d'exemple supplémentaire à la description de l'invention).

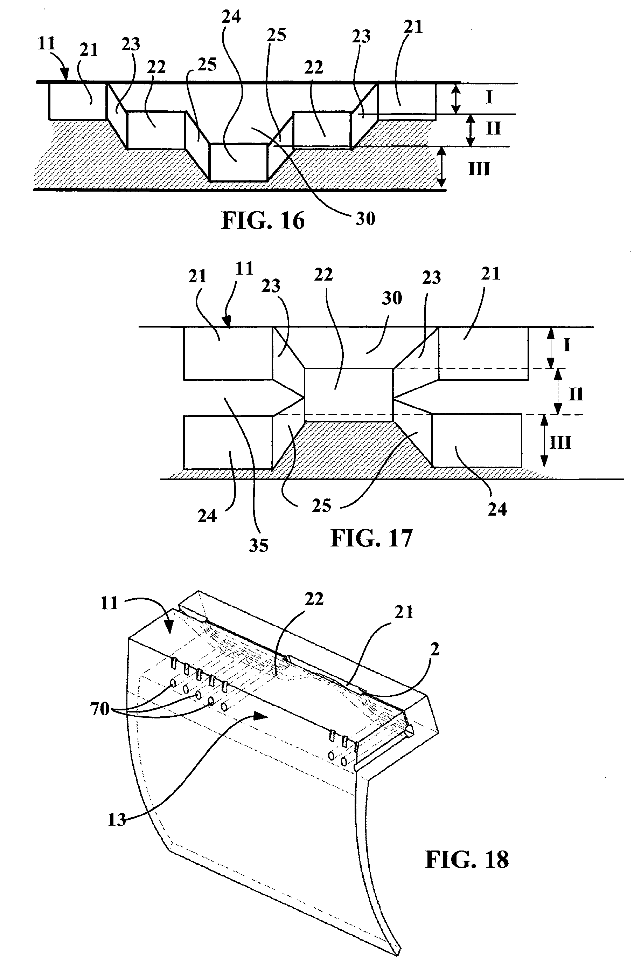

Dans une première de ces variantes (figure 16), les cavités internes et externes des différents niveaux ne se superposent pas dans l'épaisseur de la bande : elles sont en conséquence décalées les unes par rapport aux autres dans la direction circonférentielle. Dans la deuxième de ces variantes (figure 17), les cavités internes de la troisième couche d'usure se superposent dans l'épaisseur avec les cavités externes c'est-à-dire que leur position est sensiblement obtenue par translation dans l'épaisseur des cavités externes.

La figure 16 montre une rainure continue selon l'invention et définissant trois couches d'usure successives dans l'épaisseur de la bande. Selon cette variante, la rainure continue 2 comprend des cavités externes 21 ouvertes à l'état initial sur la surface de roulement 11 et se prolongeant par des canaux de liaison 23 vers des premières cavités internes 22 situées dans une deuxième couche d'usure. Ces premières cavités internes 22 étant elles mêmes prolongées par des canaux de liaison 25 vers des deuxièmes cavités internes 24 situées dans une troisième couche d'usure III. Dans cette variante montrée avec la figure 16, radialement au dessous de chaque cavité externe ou interne, il n'y a aucune autre cavité interne. Enfin cette rainure est prolongée radialement vers la surface de roulement de la bande à l'état neuf par une incision 30 facilitant le moulage et le démoulage d'une telle rainure.

Dans une autre variante, montrée avec la figure 17, la bande comprend trois couches d'usure I, II, III et la rainure représentée comprend des cavités internes 24 de la troisième couche d'usure III qui se chevauchent dans la direction de l'épaisseur avec les cavités externes 21 de la couche d'usure I. Dans les variantes montrées avec les figures 16 et 17, les diverses cavités sont représentées de dimensions sensiblement identiques ; il serait bien entendu à la portée de la personne du métier d'adapter les longueurs des différentes cavités selon leur position ou encore d'adapter les volumes respectifs de ces cavités sans sortir du cadre de la présente invention. Dans cette variante montrée avec la figure 17, les cavités internes 22 de la deuxième couche d'usure II sont reliées aux troisièmes cavités internes 24 par des canaux de liaison 25. Pour permettre le moulage et le démoulage, outre une incision 30 débouchant sur la surface de roulement 11, il est prévu une incision 35 reliant une cavité externe 21 et la cavité interne 24 radialement à l'intérieur, cette incision 35 reliant également les canaux de liaison 23 et 25. Avantageusement, ces incisions 30 et 35 sont pourvus de moyens de blocage sur les parois qui les délimitent.

Dans la variante montrée avec la figure 18, une bande de roulement selon l'invention est pourvue en outre de canaux transversaux 70 formés sous la surface de roulement 11 de la bande à l'état neuf, ces canaux transversaux sont en nombre approprié et s'ouvrent sur des rainures longitudinales 2 (c'est-à-dire circonférentielles une fois la bande incorporée à un pneu) et notamment sur des cavités internes 22 desdites rainures. Ces mêmes canaux transversaux 70 sont prévus pour s'ouvrir sur les parois latérales externes 13 de la bande de roulement et ainsi encore améliorer l'effet de drainage des rainures 2 quel que soit l'état d'usure de la bande. Ainsi dès que les cavités externes 21 ont totalement disparu par usure de la première couche d'usure de la bande, ces canaux transversaux 70 forment de nouvelles rainures transversales et permettent d'assurer la continuité de l'écoulement de l'eau des cavités internes 22 vers l'extérieur de la bande.

Bien entendu, ces canaux transversaux 70 peuvent être reliés à plusieurs cavités internes 22 de plusieurs rainures 2 afin d'améliorer l'écoulement de l'eau de toutes les rainures ainsi reliées après usure partielle de la bande en créant ainsi une sorte de réseau plus ou moins complexe. On peut également relier ces canaux transversaux 70 à des canaux continus orientés circonférentiellement et formés en totalité sous la surface de roulement à l'état neuf (comme ceux montrés aux figures 6 à 8).

Par ailleurs ces canaux 70, en apparaissant sur la surface de roulement après une usure partielle, permettent d'augmenter le taux de creux en surface et de former de nouvelles arêtes transversales utiles pour couper la couche d'eau présente sur la chaussée par temps de pluie.

L'invention n'est pas limitée aux exemples décrits et représentés et diverses modifications ou ajouts peuvent y être apportées sans sortir de son cadre tel que défini dans les revendication ci-jointes.

Notamment, la bande de roulement selon l'invention peut comprendre une combinaison d'au moins une rainure formée d'une succession de cavités externes et internes, ces dernières ne s'ouvrant sur la surface de roulement qu'après une usure partielle de ladite bande, et au moins une rainure additionnelle s'ouvrant sur la surface de roulement à l'état neuf, cette rainure additionnelle ayant une profondeur au moins égale à celle des points des rainures selon l'invention les plus à l'intérieur de la bande.

Les cavités internes de différentes rainures selon l'invention peuvent être positionnées à des niveaux différents dans l'épaisseur d'une bande.

En outre si toute la présente description s'est attachée à décrire l'application à un pneu destiné à équiper un véhicule poids lourd, il doit être compris qu'une bande de roulement comprenant une sculpture fait également partie de l'invention puisqu'une telle bande de roulement est destinée à être intégrée à un pneu (soit à la fabrication soit lors du rechapage dudit pneu).

À la différence de l'invention, les cavités moulés avec l'élément moulant décrit dans la demande (WO 02/38399) si elles définissent bien des couches d'usure différentes, ne présentent aucune réelle continuité entre les cavités externes et les cavités internes puisqu'il n'y a pas de canal de liaison entre elles permettant d'assurer une circulation de l'eau lors d'un roulage sur chaussée revêtue d'eau.

Ces dessins de sculpture selon l'invention, tout en offrant un drainage satisfaisant de la région de contact avec une chaussée pendant toute la durée d'usage, permettent de maintenir une rigidité globale élevée comparativement aux sculptures usuelles et ainsi rendent possible une réduction de l'épaisseur de la bande de roulement à performance globale identique ce qui est bien entendu favorable sur le plan de la consommation d'énergie. Cela permet aussi l'utilisation de compositions de caoutchouc appropriées.

## Revendications

1. Bande de roulement (10) pour pneu d'épaisseur E ayant une surface de roulement (11) destinée à venir en contact avec la chaussée, cette bande comprenant au moins deux couches d'usure, c'est-à-dire au moins une première et une deuxième couches d'usure dans son épaisseur, où elle est pourvue avec au moins une rainure continue (2) comprenant une pluralité de cavités externes (21) débouchant sur la surface de roulement à l'état neuf et une pluralité de cavités internes (22) placées radialement et en totalité à l'intérieur de la surface de roulement (11) à l'état neuf,
la première couche d'usure s'étendant dans l'épaisseur de la bande de roulement jusqu'aux points radialement les plus à l'intérieur des cavités externes (21),
chaque autre couche d'usure s'étendant dans la profondeur de la bande jusqu'aux points les plus à l'intérieur des cavités internes (22) de la couche d'usure considérée,
les cavités externes (21) ayant une profondeur moyenne P1, une longueur moyenne L1 et une section transversale d'aire S1,
les cavités internes (22) ayant une hauteur moyenne P2, une longueur moyenne L2 et une section transversale d'aire S2,
ces cavités externes (21) et internes (22) étant telles que : la différence entre les longueurs moyennes des cavités internes et des cavités externes est au plus égale à 20% de la longueur moyenne la plus grande (c'est-à-dire $0,80 \leq L1/L2 \leq 1,20$), la différence des aires moyennes des sections transversales des cavités internes et externes est au plus égale à 20% de l'aire moyenne la plus grande (c'est-à-dire $0,80 \leq S1/S2 \leq 1,20$),
chaque cavité externe (21) d'une rainure continue (2) étant reliée à au moins deux cavités internes (22) de la même rainure par des canaux de liaison (23) assurant la continuité entre lesdites cavités internes et externes,
cette bande comprenant en outre une pluralité d'incisions (30) s'ouvrant sur la surface de roulement de la bande à l'état neuf, chacune desdites incisions reliant deux cavités externes consécutives d'une même rainure et au moins deux canaux de liaison et au moins une cavité interne, cette bande de roulement étant **caractérisée en ce que** chaque canal de liaison a deux extrémités ayant chacune des sections transversales d'aires égales aux aires des sections transversales des cavités interne et externe reliées par ce canal de liaison.

2. Bande de roulement selon la revendication 1 **caractérisée en ce que** les profondeurs de chaque cavité interne ou externe est inférieure à la profondeur totale E de la bande.

3. Bande de roulement selon la revendication 1 ou selon la revendication 2 **caractérisée en ce que** la distance a entre chaque cavité interne et la surface de roulement de la bande de roulement à l'état neuf est supérieure à 25% de l'épaisseur totale E de la bande de roulement.

4. Bande de roulement selon l'une quelconque des revendications 1 à 3 **caractérisée en ce que** chaque couche d'usure a une épaisseur au plus égale à 75% de l'épaisseur totale E de la bande de roulement.

5. Bande de roulement selon l'une des revendications 1 à 4 **caractérisée en ce que** des cavités internes (22) sont agencées dans l'épaisseur de la bande pour déboucher après une usure partielle de la bande de roulement inférieure à l'usure totale de la première couche d'usure.

6. Bande de roulement selon l'une des revendications 1 à 5 **caractérisée en ce que** chaque canal de liaison (23) reliant une cavité externe (21) à une cavité interne (22) d'une même rainure continue (2) a une longueur Li supérieure à zéro et inférieure à la moitié de la longueur L1 des cavités externes.

7. Bande de roulement selon l'une quelconque des revendications 1 à 6 **caractérisée en ce que** les cavités internes et externes d'une même rainure ne se chevauchent pas dans la direction de l'épaisseur de la bande.

8. Bande de roulement selon l'une quelconque des revendications 1 à 7 **caractérisée en ce qu'**au moins deux cavités externes (21) sont prolongées chacune par un canal de liaison (23), ces canaux de liaison débouchant sur une même cavité interne (22).

9. Bande de roulement selon l'une quelconque des revendications 1 à 8 **caractérisée en ce que** chaque cavité externe (21) d'au moins une rainure continue (2) est prolongée à chacune des ses extrémités par deux canaux de liaison (23', 23"), ces canaux de liaison débouchant chacune dans des cavités internes distinctes.

10. Bande de roulement selon l'une quelconque des revendications 1 à 9 **caractérisée en ce qu'**elle comprend des cavités additionnelles situées dans une troisième couche d'usure prolongeant radialement à l'intérieur la deuxième couche d'usure, ces cavités additionnelles étant reliées aux cavités internes de la deuxième couche d'usure par des canaux de liaison additionnels.

11. Bande de roulement selon la revendication 1 **caractérisée en ce qu'**elle comprend une première pluralité de rainures continues formées d'une pluralité de cavités externes et internes reliées par des canaux de liaison, ces rainures étant orientées dans une première direction, et **en ce qu'**elle comprend une deuxième pluralité de rainures continues formées d'une pluralité de cavités externes et internes reliées par des canaux de liaison, les rainures de cette deuxième pluralité de rainures étant orientées dans une deuxième direction coupant la première direction pour former un réseau de rainures croisées, des cavités internes de la deuxième pluralité de rainures étant raccordées à des cavités internes de la première pluralité de rainures.

12. Bande de roulement selon la revendication 11 **caractérisée en ce que** les profondeurs de chaque cavité interne ou externe est inférieure à la profondeur totale E de la bande.

13. Bande de roulement selon la revendication 11 ou selon la revendication 12 **caractérisée en ce que** la distance a entre chaque cavité interne et la surface de roulement de la bande de roulement à l'état neuf est supérieure à 25% de l'épaisseur totale E de la bande de roulement.

14. Bande de roulement selon la revendication 1 **caractérisée en ce qu'**elle comprend une pluralité de rainures formées d'une pluralité de cavités externes et internes reliées par des canaux de liaison, ces rainures étant orientées dans la direction longitudinale de la bande et étant disposées de manière à ce que les premières cavités s'ouvrant sur la surface de roulement à l'état neuf sont disposées de manière décalée les unes par rapport aux autres dans la direction longitudinale et **en ce que** les deuxièmes cavités sont également disposées de manière décalée les unes par rapport aux autres dans la direction longitudinale.

15. Bande de roulement selon la revendication 14 **caractérisée en ce que** les profondeurs de chaque cavité interne ou externe est inférieure à la profondeur totale E de la bande.

16. Bande de roulement selon la revendication 14 ou selon la revendication 15 **caractérisée en ce que** la distance a entre chaque cavité interne et la surface de roulement de la bande de roulement à l'état neuf est supérieure à 25% de l'épaisseur totale E de la bande de roulement.

17. Bande de roulement selon l'une quelconque des revendications 1 à 16 **caractérisée en ce que** les rainures continues formées d'au moins des cavités externes et des cavités internes reliées par des canaux de liaison ont une forme générale ondulée.

18. Bande de roulement selon l'une quelconque des revendications 1 à 17 **caractérisée en ce que** chaque cavité externe s'ouvrant sur la bande de roulement à l'état neuf est prolongée radialement vers l'intérieur par une incision jusqu'au fond de la bande de roulement, cette incision étant en outre connectée à deux canaux de liaison et à deux cavités internes.

19. Bande de roulement selon l'une quelconque des revendications 1 à 18 **caractérisée en ce qu'**elle comprend en outre au moins un canal entièrement situé à l'intérieur de la bande et prévu pour former une nouvelle rainure en s'ouvrant sur la surface de roulement après une usure partielle au plus égale à l'épaisseur de la première couche d'usure.

20. Bande de roulement selon la revendication 19 **caractérisée en ce qu'**elle comprend en outre des moyens pour mettre en communication au moins un canal avec une pluralité de cavités internes d'une rainure continue.

21. Bande de roulement selon l'une quelconque des revendications 1 à 20 **caractérisée en ce qu'**elle comprend une pluralité de canaux (70) débouchant sur les bords de la bande, ces canaux s'ouvrant dans au moins une cavité interne (22) d'une rainure continue.

22. Pneu pourvu d'une bande de roulement selon l'une quelconque des revendications 1 à 21, ce pneu étant **caractérisé en ce que** la longueur moyenne de cavités externes des rainures circonférentielles est comprise entre 25% et 75% de la longueur moyenne T de la surface de contact du pneu mesurée dans les conditions nominales d'usage dudit pneu.

**Patentansprüche**

1. Laufstreifen (10) für einen Reifen einer Dicke E mit einer Lauffläche (11), die dazu bestimmt ist, mit der Fahrbahn in Kontakt zu kommen, wobei dieser Streifen mindestens zwei Verschleißschichten enthält, d.h. mindestens eine erste und eine zweite Verschleißschicht in seiner Dicke, wobei er mit mindestens einer durchgehenden Rille (2) versehen ist, die eine Vielzahl äußerer Hohlräume (21), die im Neuzustand an der Lauffläche münden, und eine Vielzahl innerer Hohlräume (22) enthält, die im Neuzustand radial und vollständig im Inneren der Lauffläche (11) angeordnet sind, wobei die erste Verschleißschicht sich in der Dicke des Laufstreifens bis zu den radial am weitesten innen liegenden Punkten der äußeren Hohlräume (21) erstreckt,

wobei jede andere Verschleißschicht sich in der Tiefe des Streifens bis zu den am weitesten innen liegenden Punkten der inneren Hohlräume (22) der betreffenden Verschleißschicht erstreckt,

wobei die äußeren Hohlräume (21) eine mittlere Tiefe P1, eine mittlere Länge L1 und einen Querschnitt einer Fläche S1 haben,

wobei die inneren Hohlräume (22) eine mittlere Höhe P2, eine mittlere Länge L2 und einen Querschnitt einer Fläche S2 haben,

wobei diese äußeren (21) und inneren Hohlräume (22) so sind, dass: die Differenz zwischen den mittleren Längen der inneren Hohlräume und der äußeren Hohlräume höchstens gleich 20% der größten mittleren Länge ist (d.h. $0{,}80 \leq L1/L2 \leq 1{,}20$), die Differenz der mittleren Flächen der Querschnitte der inneren und äußeren Hohlräume höchstens gleich 20% der größten mittleren Fläche ist (d.h. $0{,}80 \leq S1/S2 \leq 1{,}20$),

wobei jeder äußere Hohlraum (21) einer durchgehenden Rille (2) mit mindestens zwei inneren Hohlräumen (22) der gleichen Rille durch Verbindungskanäle (23) verbunden ist, die die Kontinuität zwischen den inneren und äußeren Hohlräumen gewährleisten,

wobei dieser Streifen außerdem eine Vielzahl von Einschnitten (30) enthält, die sich im Neuzustand an der Lauffläche des Streifens öffnen, wobei jeder der Einschnitte zwei aufeinanderfolgende äußere Hohlräume der gleichen Rille und mindestens zwei Verbindungskanäle und mindestens einen inneren Hohlraum verbindet, wobei dieser Laufstreifen **dadurch gekennzeichnet ist, dass** jeder Verbindungskanal zwei Enden hat, die je Querschnitte gleicher Flächen wie die Flächen der Querschnitte der inneren und äußeren Hohlräume haben, die durch diesen Verbindungskanal verbunden werden.

2.  Laufstreifen nach Anspruch 1, **dadurch gekennzeichnet, dass** die Tiefen jedes inneren oder äußeren Hohlraums geringer als die Gesamttiefe E des Streifens sind.

3.  Laufstreifen nach Anspruch 1 oder nach Anspruch 2, **dadurch gekennzeichnet, dass** der Abstand a zwischen jedem inneren Hohlraum und der Lauffläche des Laufstreifens im Neuzustand größer als 25% der Gesamtdicke E des Laufstreifens ist.

4.  Laufstreifen nach einem der Ansprüche 1 bis 3, **dadurch gekennzeichnet, dass** jede Verschleißschicht eine Dicke höchstens gleich 75% der Gesamtdicke E des Laufstreifens hat.

5.  Laufstreifen nach einem der Ansprüche 1 bis 4, **dadurch gekennzeichnet, dass** innere Hohlräume (22) in der Dicke des Streifens angeordnet sind, um sich nach einem teilweisen Verschleiß des Laufstreifens geringer als der Gesamtverschleiß der ersten Verschleißschicht zu öffnen.

6.  Laufstreifen nach einem der Ansprüche 1 bis 5, **dadurch gekennzeichnet, dass** jeder Verbindungskanal (23), der einen äußeren Hohlraum (21) mit einem inneren Hohlraum (22) einer gleichen durchgehenden Rille (2) verbindet, eine Länge Li größer als Null und geringer als die Hälfte der Länge L1 der äußeren Hohlräume hat.

7.  Laufstreifen nach einem der Ansprüche 1 bis 6, **dadurch gekennzeichnet, dass** die inneren und äußeren Hohlräume der gleichen Rille sich in Richtung der Dicke des Streifens nicht überlappen.

8.  Laufstreifen nach einem der Ansprüche 1 bis 7, **dadurch gekennzeichnet, dass** mindestens zwei äußere Hohlräume (21) je von einem Verbindungskanal (23) verlängert werden, wobei diese Verbindungskanäle in den gleichen inneren Hohlraum (22) münden.

9.  Laufstreifen nach einem der Ansprüche 1 bis 8, **dadurch gekennzeichnet, dass** jeder äußere Hohlraum (21) mindestens einer durchgehenden Rille (2) an jedem seiner Enden von zwei Verbindungskanälen (23', 23'') verlängert wird, wobei diese Verbindungskanäle je in unterschiedliche innere Hohlräume münden.

10. Laufstreifen nach einem der Ansprüche 1 bis 9, **dadurch gekennzeichnet, dass** er zusätzliche Hohlräume enthält, die sich in einer dritten Verschleißschicht befinden, die die zweite Verschleißschicht radial nach innen verlängert, wobei diese zusätzlichen Hohlräume mit den inneren Hohlräumen der zweiten Verschleißschicht durch zusätzliche Verbindungskanäle verbunden sind.

11. Laufstreifen nach Anspruch 1, **dadurch gekennzeichnet, dass** er eine erste Vielzahl von durchgehenden Rillen enthält, die von einer Vielzahl von äußeren und inneren Hohlräumen geformt werden, welche durch Verbindungskanäle verbunden sind, wobei diese Rillen in einer ersten Richtung ausgerichtet sind, und dass er eine zweite Vielzahl von durchgehenden Rillen enthält, die von einer Vielzahl von äußeren und inneren Hohlräumen geformt werden, welche durch Verbindungskanäle verbunden sind, wobei die Rillen dieser zweiten Vielzahl von Rillen in einer zweiten Richtung ausgerichtet sind, die die erste Richtung schneidet, um ein Netz von gekreuzten Rillen zu formen, wobei innere Hohlräume der zweiten Vielzahl von Rillen mit inneren Hohlräumen der ersten Vielzahl von Rillen verbunden

**12.** Laufstreifen nach Anspruch 11, **dadurch gekennzeichnet, dass** die Tiefen jedes inneren oder äußeren Hohlraums geringer als die Gesamttiefe E des Streifens sind.

**13.** Laufstreifen nach Anspruch 11 oder nach Anspruch 12, **dadurch gekennzeichnet, dass** der Abstand a zwischen jedem inneren Hohlraum und der Lauffläche des Laufstreifens im Neuzustand größer als 25% der Gesamtdicke E des Laufstreifens ist.

**14.** Laufstreifen nach Anspruch 1, **dadurch gekennzeichnet, dass** er eine Vielzahl von Rillen enthält, die von einer Vielzahl von äußeren und inneren Hohlräume geformt werden, welche durch Verbindungskanäle verbunden sind, wobei diese Rillen in Längsrichtung des Streifens ausgerichtet und so angeordnet sind, dass die ersten sich im Neuzustand an der Lauffläche öffnenden Hohlräume in Längsrichtung zueinander versetzt angeordnet sind, und dass die zweiten Hohlräume ebenfalls in Längsrichtung zueinander versetzt angeordnet sind.

**15.** Laufstreifen nach Anspruch 14, **dadurch gekennzeichnet, dass** die Tiefen jedes inneren oder äußeren Hohlraums geringer als die Gesamttiefe E des Streifens sind.

**16.** Laufstreifen nach Anspruch 14 oder nach Anspruch 15, **dadurch gekennzeichnet, dass** der Abstand a zwischen jedem inneren Hohlraum und der Lauffläche des Laufstreifens im Neuzustand größer als 25% der Gesamtdicke E des Laufstreifens ist.

**17.** Laufstreifen nach einem der Ansprüche 1 bis 16, **dadurch gekennzeichnet, dass** die von mindestens äußeren Hohlräumen und inneren Hohlräumen, die durch Verbindungskanäle verbunden sind, geformten durchgehenden Rillen eine allgemein gewellte Form haben.

**18.** Laufstreifen nach einem der Ansprüche 1 bis 17, **dadurch gekennzeichnet, dass** jeder äußere Hohlraum, der sich im Neuzustand am Laufstreifen öffnet, radial nach innen von einem Einschnitt bis an den Boden des Laufstreifens verlängert wird, wobei dieser Einschnitt außerdem mit zwei Verbindungskanälen und mit zwei inneren Hohlräumen verbunden ist.

**19.** Laufstreifen nach einem der Ansprüche 1 bis 18, **dadurch gekennzeichnet, dass** er außerdem mindestens einen Kanal enthält, der sich vollständig innerhalb des Streifens befindet und vorgesehen ist, um eine neue Rille zu formen, indem er sich nach einem teilweisen Verschleiß höchstens gleich der Dicke der ersten Verschleißschicht an der Lauffläche öffnet.

**20.** Laufstreifen nach Anspruch 19, **dadurch gekennzeichnet, dass** er außerdem Einrichtungen enthält, um mindestens einen Kanal mit einer Vielzahl von inneren Hohlräume einer durchgehenden Rille in Verbindung zu setzen.

**21.** Laufstreifen nach einem der Ansprüche 1 bis 20, **dadurch gekennzeichnet, dass** er eine Vielzahl von Kanälen (70) enthält, die an den Rändern des Streifens münden, wobei diese Kanäle sich in mindestens einen inneren Hohlraum (22) einer durchgehenden Rille öffnen.

**22.** Reifen, der mit einem Laufstreifen nach einem der Ansprüche 1 bis 21 versehen ist, wobei dieser Reifen **dadurch gekennzeichnet ist, dass** die mittlere Länge äußerer Hohlräume der Umfangsrillen zwischen 25% und 75% der mittleren Länge T der Kontaktfläche des Reifens gemessen unter Nennnutzungsbedingungen des Reifens liegt.

**Claims**

**1.** Tyre tread (10) of thickness E having a tread surface (11) intended to come into contact with the road surface, this tread comprising at least two wearing layers, i.e. at least a first and a second wearing layer within its thickness, where it is provided with at least one continuous groove (2) comprising a plurality of external cavities (21) opening onto the tread surface in the as-new condition and a plurality of internal cavities (22) placed radially and completely inside the tread surface (11) in the as-new condition,
the first wearing layer extending into the thickness of the tread as far as the radially innermost points of the external cavities (21),
each other wearing layer extending into the thickness of the tread as far as the innermost points of the internal cavities (22) of the wearing layer considered, the external cavities (21) having a mean depth P1, a mean length L1 and a cross-sectional area S1, the internal cavities (22) having a mean height P2, a mean length L2 and a cross-sectional area S2, these external (21) and internal (22) cavities being such that: the difference between the mean lengths of the internal cavities and of the external cavities is at most equal to 20% of the longest mean length (i.e. $0.80 \le L1/L2 \le 1.20$), the difference in the mean cross-sectional areas of the internal and external cavities is at most equal to 20% of the largest mean area (i.e. $0.80 \le S1/S2 \le 1.20$),
each external cavity (21) of a continuous groove (2) being connected to at least two internal cavities (22) of the same groove by connecting channels (23) that provide continuity between the said internal and said external cavities,

this tread further comprising a plurality of incisions (30) opening onto the tread surface of the tread in the as-new condition, each of the said incisions connecting two consecutive external cavities of one and the same groove and at least two connecting channels and at least one internal cavity, this tread being **characterized in that** each connecting channel has two ends each having cross-sectional areas equal to the cross-sectional areas of the internal and external cavities that are connected by this connecting channel.

2. Tread according to Claim 1, **characterized in that** the depths of each internal or external cavity is less than the total depth E of the tread.

3. Tread according to Claim 1 or Claim 2, **characterized in that** the distance a between each internal cavity and the tread surface of the tread in the as-new condition is greater than 25% of the total thickness E of the tread.

4. Tread according to any one of Claims 1 to 3, **characterized in that** each wearing layer has a thickness at most equal to 75% of the total thickness E of the tread.

5. Tread according to one of Claims 1 to 4, **characterized in that** internal cavities (22) are arranged within the thickness of the tread to become open when the tread is partially worn by less than the total wearing away in the first wearing layer.

6. Tread according to one of Claims 1 to 5, **characterized in that** each connecting channel (23) connecting an external cavity (21) to an internal cavity (22) of one and the same continuous groove (2) has a length Li of greater than zero and less than half the length L1 of the external cavities.

7. Tread according to any one of Claims 1 to 6, **characterized in that** the internal and external cavities of one and the same groove do not overlap in the direction of the thickness of the tread.

8. Tread according to any one of Claims 1 to 7, **characterized in that** at least two external cavities (21) are each extended by a connecting channel (23), these connecting channels opening onto one and the same internal cavity (22).

9. Tread according to any one of Claims 1 to 8, **characterized in that** each external cavity (21) of at least one continuous groove (2) is extended at each of its ends by two connecting channels (23', 23"), these connecting channels each opening into separate internal cavities.

10. Tread according to any one of Claims 1 to 9, **characterized in that** it comprises additional cavities situated in a third wearing layer which extends the second wearing layer radially on the inside, these additional cavities being connected to the internal cavities of the second wearing layer by additional connecting channels.

11. Tread according to Claim 1, **characterized in that** it comprises a first plurality of continuous grooves which are formed of a plurality of external and internal cavities connected by connecting channels, these grooves being oriented in a first direction, and **in that** it comprises a second plurality of continuous grooves which are formed of a plurality of external and internal cavities connected by connecting channels, the grooves of this second plurality of grooves being oriented in a second direction that intersects the first direction to form a network of criss-cross grooves, internal cavities of the second plurality of grooves being connected to internal cavities of the first plurality of grooves.

12. Tread according to Claim 11, **characterized in that** the depths of each internal or external cavity is less than the total depth E of the tread.

13. Tread according to Claim 11 or according to Claim 12, **characterized in that** the distance a between each internal cavity and the tread surface of the tread in the as-new condition is greater than 25% of the total thickness E of the tread.

14. Tread according to Claim 1, **characterized in that** it comprises a plurality of grooves which are formed of a plurality of external and internal cavities connected by connecting channels, these grooves being oriented in the longitudinal direction of the tread and being arranged in such a way that the first cavities that open onto the tread surface in the as-new condition are arranged offset from one another in the longitudinal direction, and **in that** the second cavities are also arranged offset from one another in the longitudinal direction.

15. Tread according to Claim 14, **characterized in that** the depths of each internal or external cavity is less than the total depth E of the tread.

16. Tread according to Claim 14 or according to Claim 15, **characterized in that** the distance a between each internal cavity and the tread surface of the tread in the as-new condition is greater than 25% of the total thickness E of the tread.

17. Tread according to any one of Claims 1 to 16, **characterized in that** the continuous grooves formed of at least external cavities and internal cavities connected by connecting channels have a wavy overall shape.

18. Tread according to any one of Claims 1 to 17, **characterized in that** each external cavity that opens onto the tread in the as-new condition is extended radially towards the inside by an incision as far as the bottom of the tread, this incision also being connected to two connecting channels and to two internal cavities.

19. Tread according to any one of Claims 1 to 18, **characterized in that** it further comprises at least one channel that is entirely situated within the tread and designed to form a new groove by opening onto the tread surface after partial wear that is at most equal to the thickness of the first wearing layer.

20. Tread according to Claim 19, **characterized in that** it further comprises means for placing at least one channel in communication with a plurality of internal cavities of a continuous groove.

21. Tread according to any one of Claims 1 to 20, **characterized in that** it comprises a plurality of channels (70) opening onto the edges of the tread, these channels opening into at least one internal cavity (22) of a continuous groove.

22. Tyre provided with a tread according to any one of Claims 1 to 21, this tyre being **characterized in that** the mean length of the external cavities of the circumferential grooves is between 25% and 75% of the mean length T of the contact patch of the tyre measured under nominal conditions of use of the said tyre.

**FIG 1**

**FIG 2**

**FIG 3**

**FIG 4**

**FIG. 5**

FIG 6

FIG 7

FIG 8

FIG. 9

FIG. 10

FIG. 11

**FIG. 12**

**FIG. 13**

**FIG. 14**

**FIG. 15a**

**FIG. 15b**

**FIG. 16**

**FIG. 17**

**FIG. 18**

**EP 2 483 087 B1**

**Documents brevets cités dans la description**

- WO 0238399 A